(19) Europäisches Patentamt

European Patent Office

Office européen des brevets

(11) Veröffentlichungsnummer: **0 406 752 A1**

## (12) EUROPÄISCHE PATENTANMELDUNG

(21) Anmeldenummer: **90112576.5**

(22) Anmeldetag: **02.07.90**

(51) Int. Cl.5: **B65D 19/32, B29B 17/00**

(30) Priorität: **05.07.89 DE 8908170 U**

(43) Veröffentlichungstag der Anmeldung:
**09.01.91 Patentblatt 91/02**

(84) Benannte Vertragsstaaten:
**AT DE FR GB LU**

(71) Anmelder: **Stegmaier, Peter
Panoramastrasse 38
D-7064 Remshalden 1(DE)**

(72) Erfinder: **Stegmaier, Peter
Panoramastrasse 38
D-7064 Remshalden 1(DE)**

(74) Vertreter: **Dreiss, Hosenthien & Fuhlendorforf
Gerokstrasse 6
D-7000 Stuttgart 1(DE)**

(54) **Palette.**

㊗ Bie einer Palette, bestehend aus einer mit Öffnungen (2) versehenen Platte (1) und in die Öffnung eingesetzten Stützfüßen (5), wird zur Verbilligung der Herstellung und Berücksichtigung der Belange des Umweltschutzes vorgeschlagen, die Platte (1) aus einem Kunststoffmaterial, das aus Kunststoffabfällen gewonnen ist, herzustellen.

FIG.2

Die Erfindung betrifft eine Palette, bestehend aus einer mit Öffnungen versehenen Platte und in die Öffnung eingesetzten Stützfüßen.

Derartige Paletten sind bekannt. Im allgemeinen werden sie aus Holz hergestellt; Holzpaletten haben jedoch den Nachteil, daß sie relativ teuer sind. Die Fertigung aus Kunststoff kommt dabei nicht in Frage, weil "normaler" Kunststoff als Material hierfür zu teuer ist. Auch ist das Fertigen von Formen, um Paletten zu spritzen, außerordentlich aufwendig und würde die preismäßige Kalkulation solcher Paletten erheblich belasten.

Es gibt Paletten der eingangs genannten Art, bei denen die Platte aus Wellpappe hergestellt ist. Der Nachteil besteht jedoch darin, daß sie nur dann richtig Lasten tragen, wenn sich diese direkt auf die Stützfüße abstützen, d.h. die Wellpappe eigentlich nur die Funktion der richtigen Halterung der Stützfüße zueinander hat. Sind es Güter, deren Kanten zwischen Stützfüßen auf der Platte aus Wellpappe aufliegen, so besteht die Gefahr des Knicks, des Kippens wegen ungleichmäßiger Lastverteilung u.a.

Aufgabe der Erfindung ist es, eine Palette der eingangs genannten Art zu schaffen, die im Gegensatz zu den bekannten Paletten mit einer Platte aus Pappe höhere Festigkeit und Tragkraft aufweist und außerdem erheblich billiger ist als die Paletten aus Holz, Kunststoff oder Pappe.

Erfindungsgemäß wird diese Aufgabe dadurch gelöst, daß die Platte aus einem Kunststoffmaterial gebildet ist, das aus Kunststoffabfällen gewonnen ist.

Es ist überraschend möglich, das als "Recycloplast" bekannte Material aus Haus- und Industrie-Kunststoffmüll hier qualitativ hochwertig und preisgünstig einzusetzen. Dieses durch Recycling nicht-sortenreiner Kunststoffe entstandene Material ist fest, leicht und daher billig in Platten herzustellen und kann in einfacher Weise mit den an sich bekannten Stützfüßen versehen werden, so daß Paletten ent stehen, die den wesentlich teureren Holzpaletten auch hinsichtlich der Festigkeit und der Rigidität überlegen sind.

Vorteilhafte Weiterbildungen der Erfindung sind in den Unteransprüchen definiert.

Ein Ausführungsbeispiel der Erfindung wird im folgenden unter Bezugnahme auf die beigefügten Zeichnungen beschrieben. Es stellen dar:

Figur 1 eine Draufsicht auf ein Ausführungsbeispiel;

Figur 2 einen Schnitt entlang der Linie II-II;

Figur 3 eine vergrößerte Darstellung des Bereichs III in Fig. 2.

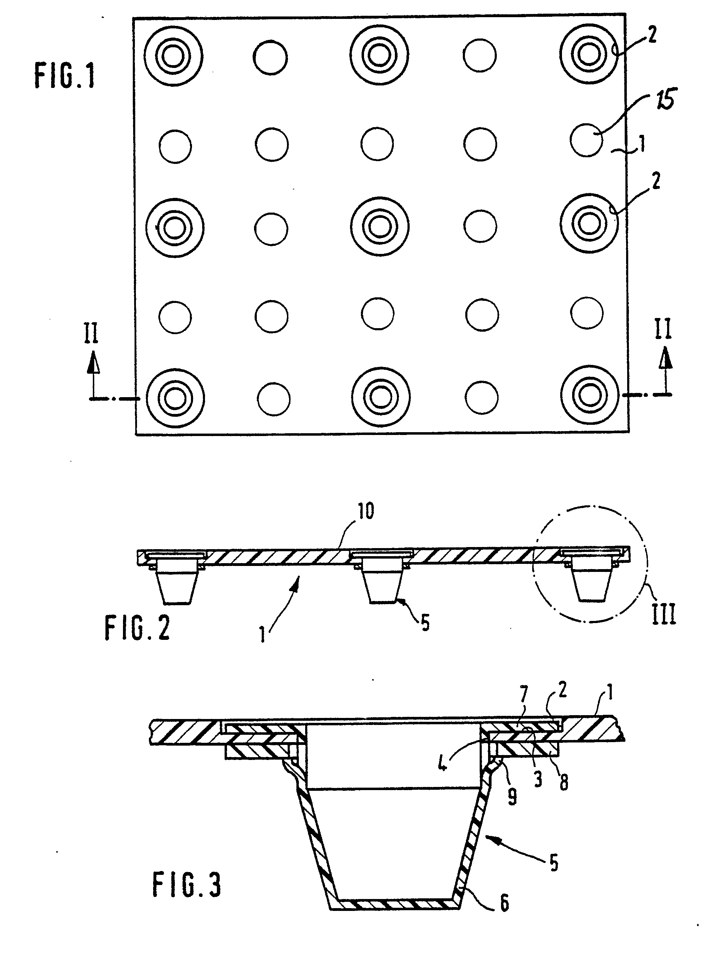

Der Aufbau der Palette ergibt sich aus den Figuren 1 und 2. Die Palette wird gebildet durch eine Platte 1, die - wie bereits erwähnt - aus einem für diesen Zweck neuen Material, nämlich aus einem Recycloplast hergestellt ist. Je nach der gewünschten Tragkraft ist die Platte 1 verschieden stark ausgebildet. Zur Materialersparnis sind Materialersparnisöffnungen 15 vorgesehen. Dieses Material, das im Handel erhältlich ist, aber für diesen Zweck noch nicht eingesetzt wurde, besteht aus Haus- und Industrie-Kunststoffmüll. Dieser Haus- und Industrie-Kunststoffmüll besteht im allgemeinen aus drei Gruppen von Abfällen, nämlich Thermoplasten (Kunststoffe, die sich unter Wärmeeinwirkung umformen lassen), Duroplasten (Kunststoffe, die ihre ursprüngliche Form beibehalten), und Elastomeren (elastische Kunststoffe). Zur Herstellung von sog. Recycloplasten werden nun die Thermoplaste zu einem knetbaren Teig aufbereitet und in diesen Fremdstoffe, wie Duroplaste und Verunreinigungen eingebettet. Sodann kommt diese Masse in hydraulische Pressen, wo sie relativ einfach zu Platten verarbeitet werden kann.

Als Rohmaterial für die erfindungsgemäßen Paletten können Platten aus dem Kunststoff, der durch die Rückverarbeitung nicht sortenreiner Kunststoffe gewonnen worden ist (Recycloplast), im Raster mit den - noch zu beschreibenden - Öffnungen bzw. Löchern 2 versehen sein, wobei dann von diesen Platten die Platten 1 in den gewünschten Abmaßen abgeschnitten werden können.

Die Öffnungen 2 sind, wie aus Fig. 3 ersichtlich, so ausgebildet, daß zunächst mit einem größeren Durchmesser ein Ab satz, dessen untere Begrenzungsfläche mit 3 bezeichnet ist, eingefräst ist. Innerhalb dieser Fläche entsteht dann die eigentliche Öffnung 4.

In diese Öffnungen sind Stützfüße 5 eingesetzt. Im Ausführungsbeipiel sind sie (siehe Fig. 3) durch einen konischen Teil 6 gebildet, der oben durch einen Kragen oder Flansch 7 abgeschlossen wird. Die Stützfüße 5 werden dann (in Fig. 2 bzw. 3) von oben nach unten in die Öffnungen 2 eingesetzt, so daß die Kragen oder Flansche 7 auf der Begrenzungsfläche 9 von oben aufliegen. Zur Sicherung von unten wird über den konischen Teil 5 ein Ring 8 gesteckt und durch Klemmnasen 9 in der gezeigten Position gehalten. Die Klemmnasen 9 sind dem konischen Teil 5 angeformt in der Weise, daß sie bei der Montage etwas nach innen hineingedrückt werden können, so daß sie dann hinter dem Ring 8 wieder nach außen schnappen und ihn derart verriegeln.

Alternativ zu dieser Art der Befestigung kann auch vorgesehen sein, die Stützfüße mit einem Bajonettverschluß auszubilden. Sie können auch eingeschoben, eingedreht oder eingerastet werden. Auf jeden Fall entsteht eine ohne Werkzeuge herstellbare und wieder lösbare Verbindung.

Dadurch, daß die Öffnung 4 bzw. 2 so ausgebildet ist, daß zunächst ein Teil mit größerem Durchmesser bis zur Be-grenzungsfläche 3 heruntergefräst ist, ist die Oberfläche 10 der Platte 1 vollkommen eben.

Gegenüber bekannten, ähnlich aufgebauten Paletten unter Verwendung von Platten aus Pappe hat die erfindungsgemäße Ausbildung der Palette den erheblichen Vorteil, daß sich eine hohe Festigkeit auch dann ergibt, wenn sich die aufgelegte Last nicht direkt auf die Stützfüße abstützt. Die Palette nimmt infolge der Eigenschaften der Platte 1 keine Feuchtigkeit auf. Mit geringem Platzbedarf können mehrere Paletten aufeinander gestapelt werden. Eine noch platzsparendere Stapelbarkeit ist in nicht montiertem Zustand gegeben.

**Ansprüche**

1. Palette, bestehend aus einer mit Öffnungen versehenen Platte und in die Öffnung eingesetzten Stützfüßen, dadurch gekennzeichnet , daß die Platte (1) aus einem Kunststoffmaterial gebildet ist, das aus Kunstoffabfällen gewonnen ist.

2. Palette nach Anspruch 1, dadurch gekennzeichnet, daß das material, aus dem die Platte (1) hergestellt ist, durch Recycling nicht-sortenreiner Kunststoffe, insbesondere durch Erwärmung von aus Haus- und Industrie-Kunststoffmüll gewonnenen Thermoplasten unter Verwendung als Trägerelement und Zusetzung von ebenfalls aus Haus- und Industriekunststoffmüll gewonnenen zerkleinerten Duroplasten besteht.

3. Palette nach Anspruch 1 oder 2, dadurch gekennzeichnet, daß die Platten (1) rasterförmig mit Öffnungen (4) versehen sind.

4. Palette nach Anspruch 3, dadurch gekennzeichnet, daß die Öffnung zunächst auf großem Durchmesser bis zu einer gewissen Begrenzungsfläche (9) zurückgesetzt und in dieser Begrenzungsfläche (9) eine Öffnung verkleinerten Durchmessers (4) vorgesehen ist, und daß die Stützfüße (5) in an sich bekannter Weise einen Flansch (7) und einen Gegenring (8) aufweisen, wobei sie derart in die Öffnungen (2, 4) eingesetzt sind, daß sie mit der Oberfläche (10) der Platte (1) flächenbündig abschließen.

5. Palette nach Anspruch 1 oder einem der folgenden, dadurch gekennzeichnet, daß die Platte (1) zur Materialersparnis weitere Öffnungen (15) aufweist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| X | DE - A1 - 3 521 830 <br> (STEGMAIER) <br> * Gesamt * <br> -- | 1-5 | B 65 D 19/32 <br> B 29 B 17/00 |
| Y | DE - A1 - 3 516 261 <br> (LUTHNER METALL-RECYCLING) <br> * Gesamt; insbesondere An- <br> sprüche 1,7 * <br> -- | 1,2 | |
| Y | DE - A1 - 3 612 647 <br> (LIPPENBERGER) <br> * Gesamt * <br> -- | 1,2 | |
| A | DE - A1 - 3 603 009 <br> (HAGEN) <br> * Gesamt * <br> ---- | 1 | |

| RECHERCHIERTE SACHGEBIETE (Int. Cl⁵) |
|---|
| B 65 D 19/00 <br> B 29 B 17/00 <br> H 01 B 15/00 <br> B 09 B  3/00 |

Der vorliegende Recherchenbericht wurde für alle Patentansprüche erstellt.

| Recherchenort | Abschlußdatum der Recherche | Prüfer |
|---|---|---|
| WIEN | 12-10-1990 | CZUBA |